(19) **Europäisches Patentamt / European Patent Office / Office européen des brevets**

(11) **EP 3 897 202 B1**

(12) **EUROPEAN PATENT SPECIFICATION**

(45) Date of publication and mention of the grant of the patent:
**27.07.2022 Bulletin 2022/30**

(21) Application number: **19806251.5**

(22) Date of filing: **25.11.2019**

(51) International Patent Classification (IPC):
**A23L 29/212** (2016.01)     **A23L 23/10** (2016.01)
**A23P 10/20** (2016.01)

(52) Cooperative Patent Classification (CPC):
**A23L 23/10; A23L 29/212; A23P 10/20;**
A23P 30/30

(86) International application number:
**PCT/EP2019/082365**

(87) International publication number:
**WO 2020/126318 (25.06.2020 Gazette 2020/26)**

(54) **SAVOURY SEASONING COMPOSITION**

SCHMACKHAFTE WÜRZZUSAMMENSETZUNG

COMPOSITION D'ASSAISONNEMENT SAVOUREUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2018 EP 18214761**

(43) Date of publication of application:
**27.10.2021 Bulletin 2021/43**

(73) Proprietor: **Unilever IP Holdings B.V.**
**3013 AL Rotterdam (NL)**

(72) Inventors:
• **JU, Xiaojie**
  **74074 Heilbronn (DE)**
• **SAILER, Winfried**
  **74074 Heilbronn (DE)**
• **SETHI, Jatin**
  **74074 Heilbronn (DE)**

(74) Representative: **van den Brom, Coenraad Richard**
**Unilever N.V.**
**Unilever Patent Group**
**Bronland 14**
**6708 WH Wageningen (NL)**

(56) References cited:
**WO-A1-2010/046038     WO-A1-2012/119765**
**WO-A1-2017/032685     WO-A1-2017/171553**
**WO-A1-2018/192753**

Description

TECHNICAL FIELD OF THE INVENTION

The present invention relates to a savoury seasoning composition, a method of preparing such a composition and to uses of such a composition.

BACKGROUND OF THE INVENTION

Savoury seasoning compositions, such as bouillon powders are popular ingredients in both commercial and consumer kitchens. Savoury seasoning compositions are usually combined with hot water and optionally further food ingredients, such as vegetables or a protein source, to prepare a ready-to-eat savoury product (e.g. a bouillon, a soup, a sauce or a gravy).

WO03000076 describes a granulated, herb bouillon powder which had the following composition: 47% milled salt 33% milled monosodium glutamate 12% olive oil 6.5% dehydrated powdered aromatics and spices 1.0% colouring green plant extract solution 0.5% dried herbs.

WO 2007/085609 describes a bouillon and/or seasoning tablet and/or cube, which comprises, in total % in weight, 0.5-10 % oil, and/or 0-5 % fat, binders, salt, between 1 and 5 % of total water, as well as between 0.5 and 8 % of cereal, vegetable and/or fruit fibers, as well as optionally sugar, spices, flavors, taste enhancers, dehydrated vegetables, herb leaves and/or plant extracts. The binders are taken from the group consisting of dextrose syrup, maltodextrin, citric acid, meat extract and processed flavors.

WO2017/171553 describes popped starchy granules having a cellular honeycomb structure, that are used e.g. in soup granulate.

Consumers are, however, put off by powdery, savoury seasoning compositions that have an artificial appearance. Also, for ease of use free-flowing compositions are desirable rather than lumpy, agglomerated powders that lead to difficulties in weighing out such seasonings.

Known savoury seasoning compositions are used to impart a certain flavour aspect to a dish, for example a meaty or vegetable flavour aspect, but should not be too dominant otherwise the resultant dish is unappetizing. Traditional savoury seasoning compositions lack any food structuring properties.

There is therefore a need to prepare savoury seasoning compositions that have a pleasant taste and natural visual appearance. In addition, it is desirable that the savoury seasoning composition has food structuring properties, e.g. provides an improved mouthfeel.

SUMMARY OF THE INVENTION

The inventors of the present invention have developed a particulate, savoury composition that has a pleasant visual appearance, taste and texture.

The inventors have unexpectedly found that the visual appearance of a bouillon can be improved by including 1-30 wt.% of puffed maize endosperm particles. The present savoury composition is more appealing due its more natural, less clumpy appearance to the consumer than traditional bouillon powders.

It has been surprisingly found that by food products prepared using the savoury composition of the present invention have an improved mouth feel and savoury taste compared to reference products. Unexpectedly, the puffed maize endosperm particles enhance the pleasant umami characteristics of soup or bouillon made using the savoury composition, while suppressing the saltiness and acrid onion & garlic notes of the savoury composition.

Accordingly, there is provided a particulate, savoury seasoning composition comprising:

   a) 1-80 wt.%, by weight of the composition, of an edible salt selected from sodium chloride, potassium chloride and combinations thereof;
   b) 1-30 wt.%, by weight of the composition, of savoury taste giving ingredients selected from glutamate, 5'-ribonucleotides, sucrose, glucose, fructose, lactic acid, citric acid and combinations thereof;
   c) up to 10 wt.%, by weight of the composition, of water; and
   d) 1-30 wt.%, by weight of the composition, of particles of puffed maize endosperm, wherein upon sieving at least 80 wt.% of said particles passes a sieve with apertures of 1500 $\mu$m, wherein the sum of a) and b) is at least 20 wt.%, of the total weight of the composition.

The present invention further pertains to a method of preparing such a particulate, savoury seasoning composition. Accordingly, there is provided a method for the preparation of a composition as defined herein, comprising the steps of:

a. providing the particles of puffed maize endosperm;

b. combining the particles of puffed endosperm with an edible salt selected from sodium chloride, potassium chloride and combinations thereof; savoury taste giving ingredients selected from glutamate, 5'-ribonucleotides, sucrose, glucose, fructose, lactic acid, citric acid and combinations thereof and up to 10 wt.%, by weight of the composition, of water;

and optionally oil and/or particulate plant and meat material.

## DETAILED DESCRIPTION OF THE INVENTION

The word 'comprising' as used herein is intended to mean 'including' but not necessarily consisting of' or 'composed of'. In other words, the listed steps or options need not be exhaustive.

Unless specified otherwise, numerical ranges expressed in the format 'from x to y' or 'x-y' are understood to include x and y. When for a specific feature multiple preferred ranges are described in the format 'from x to y' or 'x-y', it is understood that all ranges combining the different endpoints are also contemplated. For the purpose of the invention ambient temperature is defined as a temperature of about 20°C.

Unless indicated otherwise, weight percentages (wt.%) are based on the total weight of the composition.

The term "particulate" as used herein in relation to a material, refers to a savoury composition that consists of discrete particles, preferably discrete particles having an average particle size of at least 10 $\mu$m. Particle size distributions of particulate components can suitably be determined with a set of sieves of different mesh sizes. The average particle size as referred to herein is the mass weighted average particle size that can be measured by the skilled person using conventional methods, for example by sieve analysis.

The term "particulate, savoury seasoning composition" relates to a composition that is added to a food product during cooking, e.g. bouillon or stock.

The term 'puffed maize endosperm' as used herein, refers to maize kernel that has been subjected to a heat and/or pressure treatment, resulting in the kernel structure having bubble-shaped pores, followed by milling or other methods of size reduction. The term "puffed" as used herein also encompasses 'popped' maize endosperm.

The term 'bulk density' as used herein, unless indicated otherwise, refers to freely settled bulk density. Bulk density can be measured using the method of DIN:ISO 697:1981-03.

Preferably, the particulate composition consists of particles having an average particle size of at least 10 $\mu$m, preferably wherein at least 80 wt.% of the particles pass a sieve with apertures of 1500 $\mu$m.

Preferably, the composition comprises 5-75 wt.%, more preferably 10-70 wt.%, even more preferably 15-65 wt.%, more preferably 20-60 wt.%, of the edible salt, selected from sodium chloride, potassium chloride and combinations thereof. Preferably the edible salt is sodium chloride.

The composition preferably comprises, by weight of the composition, 3-25 wt.%, preferably 5-20 wt.%, of the savoury taste giving ingredients, selected from glutamate, 5'-ribonucleotides, sucrose, glucose, fructose, lactic acid, citric acid and combinations thereof. Sucrose, glucose and fructose are preferably present in the savoury composition in a total amount of 0 to 10 wt.%, more preferably 1 to 4 wt.%, even more preferably 1.5 to 2.5 wt.%, based on the weight of the savoury base.

Glutamate, for example monosodium glutamate, is preferably present in the savoury composition in an amount of 0 to 25 wt.%, more preferably 5 to 20 wt.%, even more preferably 10 to 20 wt.%, based on the weight of the savoury base.

Preferably, edible acids selected from the group of lactic acid, citric acid and combinations thereof, are present in the composition in an amount of 0 to 10 wt.%, more preferably 0.2 to 4 wt.%, even more preferably 0.5 to 2.5 wt.%, based on the weight of the savoury base.

The savoury taste ingredients may be added as such or as part of a complex ingredient mixture. In a preferred embodiment, one or more of the savoury taste giving ingredients are provided by ingredients selected from the group consisting of yeast extract, hydrolysed vegetable protein, dry meat extract, dry spices, herbs and mixtures thereof.

The savoury composition according to the invention preferably comprises 0 to 5 wt.%, more preferably 0.1 to 1 wt.%, or even 0.5 to 2 wt.%, dry meat extract, based on the weight of the savoury base.

Preferably, the savoury composition comprises yeast extracts, soy sauce and/or hydrolysed vegetable protein. More preferably, the savoury composition comprises yeast extracts, and/or hydrolysed vegetable protein. Preferably, the savoury composition comprises 0 to 5 wt.% more preferably 0.1 to 3 wt.%, most preferably 0.5 to 2 wt.% yeast extracts and/or hydrolysed vegetable protein, by weight of the savoury base.

The total amount of edible salt and savoury taste giving ingredients in the savoury composition is preferably 20 to 90 wt.%, preferably 30 to 80 wt.%, even more preferably 40 to 70 wt.%, based on the weight of the savoury base. It is especially preferred that the total amount edible salt and savoury taste giving ingredients in the savoury composition is higher than that of the other non-fat ingredients, like fillers, flavour ingredients and water.

Preferably, the savoury taste giving ingredients may be added as such or as part of a more complex ingredient like a yeast extract, meat extract, plant extract, hydrolysed vegetable protein, or a fish extract. It is preferred that the composition comprises 5-25 wt.%, preferably 10-20 wt.% of savoury taste giving ingredients.

The sum of ingredients a) and b) is at least 20 wt.% of the total weight of the savoury composition. Preferably, sum of ingredients a) and b) is at least 30 wt.%, more preferably at least 40 wt.%, even more preferably at least 50 wt.% and most preferably at least 60 wt.% of the total weight of the savoury composition.

The composition preferably comprises, by weight of the composition, up to 9 wt.% of water, more preferably up to 8 wt.% of water. In a preferred embodiment, the composition comprises 1-8 wt.%, preferably 2-6 wt.%, of water.

Preferably, the puffed maize endosperm particles are present in a concentration of 1 to 33 wt.%, more preferably 2-30 wt.%, most preferably 4-27 wt.%, by weight of the composition.

Preferably, the components a) to d) of the composition together constitute at least 50 wt.% of the composition. More preferably, the components a) to d) of the composition together constitute at least 65 wt.% of composition. Most preferably, the components a) to d) of the composition together constitute at least 70 wt.% of the composition.

The visual appearance of the savoury composition can be analysed using the CIE L*a*b* colour model as defined by the International Commission on Illumination (CIE) in 1976 (ISO 11664-4:2008; Colorimetry -- Part 4: CIE 1976 L*a*b* Colour space). The three coordinates of CIE colour model represent the lightness of the colour (L* = 0 yields black and L* = 100 indicates diffuse white; specular white may be higher), its position between red/magenta and green (a*, negative values indicate green while positive values indicate magenta) and its position between yellow and blue (b*, negative values indicate blue and positive values indicate yellow).

The CIE L*a*b* colour model is perceptually uniform, i.e., a change of the same amount in a colour value produces a change of about the same visual importance. In other words, Euclidean distance in the colour space is proportional to human perception. Change in colour can be determined using Equation (1):

$$d\,E \;\; = \sqrt{((d\,L^2) + (d\,a^2) + (d\,b^2))} \quad (1)$$

where $dL = L^*_2 - L^*_1$; $da = a^*_2 - a^*_1$; $db = b^*_2 - b^*_1$

The magnitude of dE represents a change in colour. As used herein, "dE" means a dE for a savoury seasoning composition as defined herein, the dE being calculated by reference to a composition that corresponds to the savoury seasoning composition as defined herein without particles of puffed maize endosperm.

Preferably, the particulate, savoury seasoning composition as defined herein, has a dE of more than 0.5, more preferably a dE of more than 1.0. Preferably, the particulate, savoury seasoning composition as defined herein has a dE in the range of 1.0 to 2.0, more preferably a dE in the range of 2.0 to 4.0, even more preferably more in the range of 4.0 to 5.0, yet more preferably a dE of more than 5.0.

*Puffed maize endosperm particles*

Maize is cultivated around the world. The fruits or maize cobs contain the seeds of the maize, known as maize kernels. Maize kernels have a typical shape and structure, which typically includes a germ, endosperm and pericarp. The endosperm tissue of maize is particularly rich in starches, typically amylase and amylopectin. In addition, it has a relatively high fibre content. The pericarp (hull) of maize kernels is relatively strong and water-impermeable

The particles of puffed maize endosperm can be suitably obtained by puffing of maize endosperm, followed by milling or other methods of size reduction. The term "puffing" as used herein also encompasses popping of maize endosperm. If for example popped popcorn is comminuted, the resulting mixture of particles may include germ, endosperm and pericarp, but most of the volume and weight will usually be constituted by the expanded endosperm.

Depending on the comminution method, it may be desirable to fractionate the ground material, in order to obtain a particulate material with a suitable size distribution. Such fractionation is conveniently carried out by sieving, which is a well-known technique.

The particle size distribution of the particles of puffed endosperm material used in the present invention can also conveniently be analysed by sieving. It is preferred that such analysis is carried out following the sieving method described in the Examples section below.

Puffing of maize endosperm requires a high starch content. Preferably, the maize endosperm has a starch content of at least 50 wt.%, more preferably of at least 60. wt.% and most preferably of at least 70 wt.%, by weight of dry matter.

A process of puffing can for example be done, by pre-cooking and drying the maize kernels, followed by a heating step (e.g. frying in oil). Alternatively, the maize kernels can for example be puffed by explosion/gun puffing, where the raw or pre-cooked maize kernels are placed in a sealed drum that is rotated and heated from the outside until a certain pressure is obtained, the lid is released and all maize kernels puff at the same time, and escape the drum via the lid, and are collected in a bag where water vapour can escape.

Maize kernels comprise a water impermeable hull, which keeps the water inside the seed during heating, are suitable for popping. Popping is an (almost) explosive form of puffing, in which heating of the maize kernels causes starch gelatinization and pressure build-up due to steam formation until the hull bursts and the maize kernels explosively expands to form a foamy structure.

The particles of puffed maize endosperm are preferably obtained from puffed popcorn, more preferably from popped popcorn. Certain maize cultivars have been specifically bred for their suitability to be popped, including for instance Zea *mays var. everta.* Therefore, the particles of puffed maize endosperm are most preferably sourced from Zea *mays var. everta.*

According to a preferred embodiment, at least 80 wt.%, more preferably at least 90 wt.% of the starch within the puffed maize endosperm is gelatinized.

The puffed maize endosperm particles preferably have a bulk density that falls within the range of 5-220 g/l. More preferably, the puffed maize endosperm particles have a bulk density that falls within the range of 15-190 g/l, most preferably a bulk density that falls within the range of 30-170 g/l. Preferably, the puffed maize endosperm has a bulk density in the range of 25 to 100 g/L, more preferably between 35 to 80 g/L, even more preferably between 45 to 60 g/L.

It is particularly preferred that upon sieving at least 80 wt. % of said puffed maize endosperm particles passes a sieve with apertures of 1000 $\mu$m, preferably at least 80 wt.% of said particles passes a sieve with apertures of 800 $\mu$m, more preferably at least 80 wt.% of said particles passes a sieve with apertures of 500 $\mu$m and wherein preferably not more than 35 wt. % of said particles passes a sieve with apertures of 100 $\mu$m, and wherein preferably not more than 35 wt. % of said particles passes a sieve with apertures of 150 $\mu$m.

Preferably, at least 95 wt.% of said puffed maize endosperm particles passes a sieve with apertures of 400 $\mu$m and not more than 20 wt.% of said particles passes a sieve with apertures of 100 $\mu$m.

In a preferred embodiment, the composition comprises 1-20 wt.%, by weight of the composition, of oil, preferably 2-15 wt.%, more preferably 5-10 wt.%, of oil.

The terms 'fat' or 'oil' are used interchangeably, unless specified otherwise. The terms 'fat' and 'oil' as used herein refers to glycerides selected from triglycerides, diglycerides, monoglycerides, phosphoglycerides, free fatty acids and combinations thereof. Where applicable the prefix 'liquid' or 'solid' is added to indicate whether the fat or oil is liquid or solid at 20°C. "

The term "liquid oil" as used herein refers to fat that is liquid at 20 °C.

Preferably, the oil is selected from sunflower oil, soybean oil, rapeseed oil, maize oil, olive oil, cottonseed oil, safflower oil, palm olein and combinations thereof.

In a preferred embodiment, the composition comprises 5-50 wt.% of particulate plant and meat material selected from meat pieces, meat flavour, herbs, spices, vegetables and combinations thereof. Preferably, the composition comprises 10-40 wt.%, even more preferably 15-30 wt.% of the particulate plant and meat material. Preferably at least 80 wt. % of said particulate plant and meat material passes a sieve with apertures of 2000 $\mu$m.

In another preferred embodiment, the composition comprises:

a) 20-70 wt.%, by weight of the composition, of an edible salt selected from sodium chloride, potassium chloride and combinations thereof;
b) 3-25 wt.%, by weight of the composition, of savoury taste giving ingredients selected from glutamate, 5'-ribonucleotides, sucrose, glucose, fructose, lactic acid, citric acid and combinations thereof;
c) 1-8 wt.%, by weight of the composition, of water; and
d) 2-25 wt.%, by weight of the composition, of particles of puffed maize endosperm, wherein upon sieving at least 80 wt.% of said particles passes a sieve with apertures of 1500 $\mu$m;
e) 1-5 wt.%, by weight of the composition, of oil;
f) 5-20 wt.%, by weight of the composition, of particulate plant and meat material,

wherein the sum of a) and b) is at least 40 wt.% of the total weight of the composition.

It is preferred that at least 80 wt.% of the particulate composition passes a sieve with apertures of 1 mm.

In a second aspect, the present invention relates to a method for the preparation of a composition defined herein, wherein the method comprises the steps of:

a. providing the particles of puffed maize endosperm;

b. combining the particles of puffed endosperm with an edible salt selected from sodium chloride, potassium chloride and combinations thereof; savoury taste giving ingredients selected from glutamate, 5'-ribonucleotides, sucrose, glucose, fructose, lactic acid, citric acid and combinations thereof and up to 10 wt.%, by weight of the composition, of water; and optionally oil and/or particulate plant and meat material.

In a preferred embodiment, the method comprises the steps of:

 a. providing a composition according as defined herein,
 b. combining the composition of step a. with a cooking liquid.

The ingredients and amounts thereof of the savoury composition as defined elsewhere herein apply *mutatis mutandis* to the process of the present invention.

In a third aspect, the present invention relates to the use of particles of puffed maize endosperm to improve the visual appearance and umami characteristics of particulate, bouillon and/or savoury seasoning compositions, wherein upon sieving at least 80 wt.% of said particles passes a sieve with apertures of 1500 µm.

In a fourth aspect, the present invention relates to the use of particles of puffed maize endosperm to improve the mouth feel of food products prepared with particulate, bouillon and/or savoury seasoning compositions, wherein upon sieving at least 80 wt.% of said particles passes a sieve with apertures of 1500 µm.

## EXAMPLES

### Bulk density determination:

The bulk density of the particles was measured according to method DIN ISO 697:1981-03. Measurement equipment "Schüttdichtemessgerät SMG 697" (Powtec Machinen und Engineering GmbH, Remscheid, Germany. The untapped density of the puffed maize endosperm particles is typically 75 g/L.

### Preparation of particles of puffed maize endosperm

Puffed maize was obtained from Pesika Körnergut GmbH (Germany). The puffed maize was comminuted by milling to a particle size of < 3mm using a Solia Type M 30 (screen 334) and subjecting the thus milled puffed maize to a milling process using a Bauermeister: Probat Baumeisternühle ULD - VA. mill with different screen sizes (0,5mm, 0,8mm, 1,0mm, 1,5mm).

### Particle size of puffed maize endosperm calculation

The resulting powder was analysed on particle size distribution by the following method: 25 gram aliquots through a stack of stainless steel sieves (apertures 1.0 mm, 0.8, 0.5, 0.25 0.125 and 1.5 mm respectively), using a vibratory sieve shaker (type AS200 digit, Retsch Gmbh & Co., Haan, Germany) pre-set at 60 Hz for 5 minutes. The powder fraction on each sieve was determined.

The average particle size was calculated as the sum of the results of mean value of diameters (of sieve pore) multiplied by the corresponding percentage of fraction as shown in equation 2 below:

$$\frac{\sum(Xn*Yn)}{100\%} \quad (2)$$

The average particle size calculated from table 1 below is 0,407 mm.

Table one shows particle distribution of a sample generated by above mentioned milling process while using 0,5mm sieve in Bauermeister mill.

Table 1

| Sieve Analyses[1] | mean value of diameters | | Bauermeister <0,5mm Average -Fraction size [%] | |
|---|---|---|---|---|
| DESCRIPTION [mm] | Xn | mm | Yn | % |
| 1,00 >= 0,80 mm | X4 | 0.9 | Y4 | 3.7% |
| 0,80 >= 0,50 mm | X3 | 0.65 | Y3 | 18% |
| 0,50 >= 0,25 mm | X2 | 0.375 | Y2 | 63.6% |

(continued)

| Sieve Analyses[1] | mean value of diameters | | Bauermeister <0,5mm Average -Fraction size [%] | |
|---|---|---|---|---|
| 0,25 > 0 mm | X1 | 0.125 | Y1 | 14.7% |
| [1]ISO 2591-1:1988 | | | | |

**Colour lab scale analysis**

The determine of savoury compositions was assessed using the CIE L*a*b model. This model allows directly comparison between samples and calculation of colour differences. The analysis was conducted using a Spectrometer model CM-5 (Konica Minolta). Spectral range is 360-740 nm; 10nm steps. measured at 20°C.

From the measured L*a*b values the colour difference dE be calculated according to equation 1:

$$dE = \sqrt{((dL^2) + (da^2) + (db^2))} \tag{1}$$

where $dL = L^*_2-L^*_1$; $da = a^*_2-a^*_1$; $db = b^*_2-b^*_1$
where dE:

| | |
|---|---|
| < 0.5 = | No perceived colour change to observer |
| 0.5-1.0 = | Colour change perceived by trained observer |
| 1.0-2.0 = | Noticeable colour change perceived by observer |
| 2.0-4.0 = | Clear colour change perceived by observer |
| 4.0-5.0 = | Significant colour change perceived by observer |
| >5.0 = | Different colour perceived by observer |

The samples are stored for 1 month under nitrogen atmosphere. The color analysis was done on both powder and solutions made up by dissolving the powder with 95°C water (16 - 20g/L). The dilution factor is accordingly adjusted to make sure the amount of taste giving ingredients is the same per L.

**Example 1**

Compositions shown in Table 2 were prepared in two steps. 3Kg of basic mix without fillers (extruded potato starch, wheat fibres and milled puffed maize powder) are weighted and mixed in Kennwood at speed 1 for 3 mins. The oil is added slowly and then adjust the speed to 2 and mix for another 5 mins. Parsley pieces are added and then mixed at speed 1 for 2 mins. 54 grams of different fillers were added to 447 grams of basic mix and then mixed in Kennwood at speed 4 for 1 minute.

Table 2 Compositions

| | A wt.% | B wt.% | C wt.% | 1 wt.% |
|---|---|---|---|---|
| **Ingredients** | | | | |
| Inosinate/Guanylate IG | 0.67 | 0.67 | 0.67 | 0.67 |
| Monosodiumglutamate 0,25mm-0,7mm | 13.39 | 13.39 | 13.39 | 13.39 |
| Salt, Evaporated 0,2-0,6 mm | 54.03 | 54.03 | 54.03 | 54.03 |
| Sugar.Fine, 0.1-0.75 mm | 10.75 | 10.75 | 10.75 | 10.75 |
| Turmeric powder ≤ 0,8 mm | 0.54 | 0.54 | 0.54 | 0.54 |
| F&O Palm oil olein, IV56 | 1.08 | 1.08 | 1.08 | 1.08 |
| Garlic AD Powder | 1.27 | 1.27 | 1.27 | 1.27 |
| Onion White AD Powder | 3.23 | 3.23 | 3.23 | 3.23 |

(continued)

|  | A wt.% | B wt.% | C wt.% | 1 wt.% |
|---|---|---|---|---|
| **Ingredients** |  |  |  |  |
| Parsley AD Leaves 2-4 mm | 0.54 | 0.54 | 0.54 | 0.54 |
| Oregano Leaves 2-4 mm | - | - | - | - |
| Chicken AD Powder ≤ 1,5 mm | 3.76 | 3.76 | 3.76 | 3.76 |
| Extruded potato starch "Aero-Myl" (Südstärke GmbH) | - | 10.75 | - | - |
| wheat fibres non-digestible (average 250 $\mu$m) (J. RETTENMAIER & SOHNE GmbH + Co KG) | - | - | 10.75 | - |
| Puffed maize endosperm[1] | - | - | - | 10.75 |
| Water | - | - | - | - |
| SUM | 89.25 | 100.00 | 100.00 | 100.00 |
| Dilution factor g/L | 16.065 | 18 | 18 | 18 |
| [1] mesh size 0.5 mm; average particle size 0.407 mm | | | | |

The dilution factor is accordingly adjusted to make sure the amount of taste giving ingredients is the same per L.

The formulations of Table 2 were analysed in terms of visual appearance. The results are summarized in Table 3.

Table 3: Sensory analysis of compositions - powder

| Sample | Appearance in dry form (powder) |
|---|---|
| **A** | Dark yellow, homogenous |
| **B** | Lighter than reference, some agglomeration of particles |
| **C** | Lighter than reference, large soft agglomerations |
| **1** | Lighter than reference, no agglomeration of particles, |

The formulations of Table 1 were diluted in water and boiled to provide bouillon solutions. Briefly, 16-20 g (according to the dilution factor for each sample) was boiled in 1000 mL water for 2 minutes. The organoleptic properties of the samples were evaluated by a tasting panel (n=5) and are presented in table 4.

Table 4: Sensory analysis of compositions - solution

| Sample | Appearance in solution | Taste | Mouth feeling |
|---|---|---|---|
| **A** | pale yellow, clear | strong raw garlic and onion flavour notes | watery |
| **B** | more turbid than reference, no sediment | no impact | no impact |
| **C** | no colour change but some sediment | no impact | no impact |
| **1** | more turbid than **B,** some sediment, colour is more orange | more umami & less salty than reference | smoother than reference |

## Example 2

Different compositions were prepared having 0, 5, 10 and 20 wt.% puffed maize endosperm as shown in Table 5.

Table 5: Compositions

| Ingredient | D wt.% | 2 wt.% | 3 wt.% | 4 wt.% |
|---|---|---|---|---|
| Salt. Evaporated 0.2-0.6 mm | 61.65 | 58.57 | 55.49 | 49.32 |

(continued)

| Ingredient | D wt.% | 2 wt.% | 3 wt.% | 4 wt.% |
|---|---|---|---|---|
| Chicken AD Powder ≤ 1.5 mm | 4.29 | 4.08 | 3.86 | 3.44 |
| Onion White AD Powder | 3.68 | 3.50 | 3.31 | 2.94 |
| Turmeric powder ≤ 0.8 mm | 0.61 | 0.58 | 0.55 | 0.49 |
| Garlic AD Powder | 1.45 | 1.38 | 1.30 | 1.16 |
| Monosodiumglutamate 0.25mm-0.7mm | 15.28 | 14.52 | 13.75 | 12.22 |
| Inosinate Guanylate IG | 0.76 | 0.72 | 0.69 | 0.61 |
| Sucrose. Fine. 0.1-0.75mm | 12.27 | 11.6 | 11.04 | 9.82 |
| Puffed maize endosperm[1] | 0 | 5 | 10.00 | 20.00 |
| SUM | 100.00 | 100 | 100.00 | 100.00 |
| Dilution factor g/L | 16 | 16.84 | 17.78 | 20 |
| [1] mesh size 0.5 mm; average particle size 0.407 mm | | | | |

The dilution factor is accordingly adjusted to make sure the amount of taste giving ingredients is the same per L.

Table 6: Sensory analysis of compositions

| Sample | Appearance in solution | Taste | Mouth feeling |
|---|---|---|---|
| D | Pale yellow, clear | Strong raw garlic and onion flavour notes | Watery |
| 2 | More turbid than reference | More rounded and umami than sample D | Thicker texture than sample D |
| 3 | more turbid than reference, | More umami than sample D | Thicker than sample D / gelatine like |
| 4 | more turbid than reference, | More umami than sample D | Thicker than reference / more gelatine like than 3 |

Compositions of table 5 were analysed using the CIE L*a*b model described above.

Table 7: CIE L*a*b model analysis of compositions

| Sample | Powders | | | | Water Solution | | | |
|---|---|---|---|---|---|---|---|---|
| | L*(D65) | a*(D65) | b*(D65) | dE | L*(D65) | a*(D65) | b*(D65) | dE |
| D | 77.86 | -3.69 | 45.65 | ref | 94.08 | -1.92 | 18.97 | ref |
| 2 | 79.55 | -3.46 | 44.51 | 1.14 | 90.31 | -1.48 | 21.14 | 2.17 |
| 3 | 81.82 | -3.44 | 42.59 | 3.06 | 88.48 | -1.16 | 20.72 | 2.31 |
| 4 | 84.71 | -3.48 | 37.7 | 7.95 | 80.68 | -0.69 | 24.02 | 5.05 |

The results shown in Table 7 confirm that the compositions as shown in Table 5 comprising puffed maize endosperm have a perceivable different visual appearance, which lighter colour is more appealing to the consumer due to its less artificial and more natural appearance.

**Example 3**

| Ingredient | E | 5 | 6 | 7 |
|---|---|---|---|---|
| Inosinate/Guanylate | 0.1 | 0.1 | 0.1 | 0.1 |
| Potassium Chloride E508 | 9.0 | 9.0 | 9.0 | 9.0 |
| Salt, Evaporated, Iodized | 38.0 | 38.0 | 38.0 | 38.0 |
| Sucrose | 9.5 | 9.5 | 9.5 | 9.5 |
| Spices[1] | 1.3 | 1.3 | 1.3 | 1.3 |
| Vegetable matter[2] | 13.2 | 13.2 | 13.2 | 13.2 |
| Puffed maize endosperm[3] | | 10 | | |
| Puffed maize endosperm[4] | | | 10 | |
| Puffed maize endosperm[5] | | | | 10 |
| Total | 73.1 | 83.1 | 83.1 | 83.1 |
| dilution factor g/L | 14.62 | 16.24 | 16.24 | 16.24 |

Different compositions were prepared comprising puffed maize endosperm particles having different particle sizes as shown in Table 8.

Table 8

[1] spices include powders of turmeric, fenugreek, leek, bay, celery seed,

[2] vegetable pieces including celery, carrot, celeriac, onion, parsley, lovage

[3] mesh size 1 mm; average particle size 0.62 mm

[4] mesh size 0.8 mm; average particle size 0.575 mm

[5] mesh size 1.5 mm; average particle size 0.91 mm

The formulations of Table 8 were diluted in water and boiled to provide bouillon solutions. Briefly, 16-20 g (according to the dilution factor for each sample) was boiled in 1000 mL water for 2 minutes. The organoleptic properties of the samples were evaluated by a tasting panel (n=5) and are presented in table 9.

Table 9 Sensory analysis of compositions

| Sample | Appearance in solution | Taste | Mouth feeling |
|---|---|---|---|
| E | Pale yellow, clear | salty | watery |
| 5 | more turbid than reference | muted salty | Smoother than reference |
| 6 | more turbid than reference, | muted salty | Smoother than reference |
| 7 | more turbid than reference, | muted salty | Smoother than reference |

The compositions shown in Table 8 were analysed by the CIE L*a*b model described above. The results are shown in Tables 10 and 11.

Table 10 CIE L*a*b model analysis of compositions as powder

| Composition | L*(D65) | a*(D65) | b*(D65) | dE* |
|---|---|---|---|---|
| E | 69.24 | 11.62 | 20.78 | ------ |

(continued)

| Composition | L*(D65) | a*(D65) | b*(D65) | dE* |
|:---:|:---:|:---:|:---:|:---:|
| 7 | 81.47 | 5.33 | 16.97 | 13.38 |
| 6 | 81.29 | 4.23 | 23.82 | 13.56 |
| 5 | 80.18 | 4.84 | 24.27 | 12.46 |

Table 11 CIE L*a*b model analysis of compositions as solution

| LAB analysis of water solutions | L*(D65) | a*(D65) | b*(D65) | dE* |
|:---:|:---:|:---:|:---:|:---:|
| E | 95.67 | 0.1 | 14.88 | ------ |
| 7 | 92.35 | 0.02 | 19.8 | 5.93 |
| 6 | 90.14 | 0.75 | 23 | 9.85 |
| 5 | 93.65 | 0.12 | 18.21 | 3.9 |

Results from CIE L*a*b model analysis showed that 10% puffed maize endosperm at different size all lead to significant difference in powder as such and water solutions comparing to the reference sample E.

**Claims**

1. A particulate, savoury seasoning composition comprising:

   a) 1-80 wt.%, by weight of the composition, of an edible salt selected from sodium chloride, potassium chloride and combinations thereof;
   b) 1-30 wt.%, by weight of the composition, of savoury taste giving ingredients selected from glutamate, 5'-ribonucleotides, sucrose, glucose, fructose, lactic acid, citric acid and combinations thereof;
   c) up to 10 wt.%, by weight of the composition, of water; and
   d) 1-30 wt.%, by weight of the composition, of particles of puffed maize endosperm, wherein upon sieving at least 80 wt.% of said particles of maize endosperm passes a sieve with apertures of 1500 $\mu$m,
   e) 1-20 wt.%, by weight of the composition, of oil wherein the sum of a) and b) is at least 20 wt.%, of the total weight of the composition.

2. Composition according to claim 1, wherein the particulate consists of particles having an average particle size of at least 10 $\mu$m, preferably wherein at least 80 wt.% of the particles pass a sieve with apertures of 1500 $\mu$m.

3. Composition according to claim 1 or 2, comprising 2-15 wt.%, by weight of the composition, of oil, preferably 5-10 wt.%, of oil, preferably wherein the oil is selected from the group consisting of sunflower oil, soybean oil, rapeseed oil, maize oil, olive oil, cottonseed oil, safflower oil, palm olein and combinations thereof.

4. Composition according to any one of the preceding claims, wherein the composition comprises 5-75 wt.%, preferably 10-70 wt.%, of salt.

5. Composition according to any one of the preceding claims wherein the composition comprises 5-25 wt.%, preferably 10-20 wt.% of savoury taste giving ingredients.

6. Composition according to any one of the preceding claims, wherein the composition comprises 1-8 wt.%, preferably 2-6 wt.%, of water.

7. Composition according to any one of the preceding claims, wherein the puffed maize endosperm has a bulk density in the range of 25 to 100 g/L, more preferably between 35 to 80 g/L.

8. Composition according to any one of the preceding claims, wherein upon sieving at least 80 wt. % of said particles passes a sieve with apertures of 1000 μm, preferably at least 80 wt.% of said particles passes a sieve with apertures of 800 μm, more preferably at least 80 wt.% of said particles passes a sieve with apertures of 500 μm and wherein preferably not more than 35 wt. % of said particles passes a sieve with apertures of 100 μm, and wherein preferably not more than 35 wt. % of said particles passes a sieve with apertures of 150 μm.

**9.** Composition according to any one of the preceding claims, wherein the composition comprises 5-50 wt.% of particulate plant and meat material selected from meat pieces, meat flavour, herbs, spices, vegetables and combinations thereof.

**10.** Composition according to any one of the preceding claims, wherein at least 80 wt. % of said particulate plant and meat material passes a sieve with apertures of 2000 μm.

**11.** Composition according to any one of the preceding claims, comprising:

a) 20-70 wt.%, by weight of the composition, of an edible salt selected from sodium chloride, potassium chloride and combinations thereof;
b) 3-25 wt.%, by weight of the composition, of savoury taste giving ingredients selected from glutamate, 5'-ribonucleotides, sucrose, glucose, fructose, lactic acid, citric acid and combinations thereof;
c) 1-8 wt.%, by weight of the composition, of water; and
d) 2-25 wt.%, by weight of the composition, of particles of puffed maize endosperm, wherein upon sieving at least 80 wt. % of said particles passes a sieve with apertures of 1500 μm;
e) 1-5 wt.%, by weight of the composition, of oil;
f) 5-20 wt.%, by weight of the composition, of particulate plant and meat material, wherein the sum of a) and b) is at least 40 wt.% of the total weight of the composition.

**12.** Method for the preparation of a composition according to any one of claims 1 to 11, wherein the method comprises the steps of:

a. providing particles of puffed maize endosperm;
b. combining the particles of puffed endosperm with oil and an edible salt selected from sodium chloride, potassium chloride and combinations thereof and savoury taste giving ingredients selected from glutamate, 5'-ribonucleotides, sucrose, glucose, fructose, lactic acid, citric acid and combinations thereof.

**13.** Method for the preparation of a composition according to claim 12, further comprising the step of combining the particles of puffed endosperm with particulate plant or meat material.

**14.** Method for the preparation of a food product, wherein the method comprises the steps of:

a. providing a composition according to any one of claims 1 to 11,
b. combining the composition of step a. with a cooking liquid.

**15.** Use of particles of puffed maize endosperm to improve the visual appearance of particulate, seasoning compositions and umami characteristics thereof, wherein upon sieving at least 80 wt.% of said particles passes a sieve with apertures of 1500 μm.

**Patentansprüche**

**1.** Teilchenförmige, schmackhafte Würzzusammensetzung, umfassend:

a) 1-80 Gew.-% eines essbaren Salzes, bezogen auf das Gewicht der Zusammensetzung, ausgewählt aus Natriumchlorid, Kaliumchlorid und Kombinationen davon;
b) 1-30 Gew.-% an herzhaften Geschmack verleihenden Zutaten, bezogen auf das Gewicht der Zusammensetzung, ausgewählt aus Glutamat, 5'-Ribonucleotiden, Saccharose, Glucose, Fructose, Milchsäure, Zitronensäure und Kombinationen davon;
c) bis zu 10 Gew.-% Wasser, bezogen auf das Gewicht der Zusammensetzung; und
d) 1-30 Gew.-% Teilchen von Puffmais-Endosperm, bezogen auf das Gewicht der Zusammensetzung, wobei beim Sieben mindestens 80 Gew.-% der Teilchen des Mais-Endosperms ein Sieb mit Öffnungen von 1500 μm

passieren,

e) 1-20 Gew.-% Öl, bezogen auf das Gewicht der Zusammensetzung, wobei die Summe von a) und b) mindestens 20 Gew.-% des Gesamtgewichts der Zusammensetzung beträgt.

2. Zusammensetzung nach Anspruch 1, wobei das teilchenförmige Material aus Teilchen einer durchschnittlichen Teilchengröße von mindestens 10 $\mu$m besteht, wobei vorzugsweise mindestens 80 Gew.-% der Teilchen ein Sieb mit Öffnungen von 1500 $\mu$m passieren.

3. Zusammensetzung nach Anspruch 1 oder 2, umfassend 2-15 Gew.-% Öl, bezogen auf das Gewicht der Zusammensetzung, vorzugsweise 5-10 Gew.-% Öl, wobei das Öl vorzugsweise aus der Gruppe ausgewählt ist, bestehend aus Sonnenblumenöl, Sojabohnenöl, Rapsöl, Maisöl, Olivenöl, Baumwollsamenöl, Distelöl, Palmolein und Kombinationen davon.

4. Zusammensetzung nach irgendeinem der vorhergehenden Ansprüche, wobei die Zusammensetzung 5-75 Gew.-%, vorzugsweise 10-70 Gew.-% Salz umfasst.

5. Zusammensetzung nach irgendeinem der vorhergehenden Ansprüche, wobei die Zusammensetzung 5-25 Gew.-%, vorzugsweise 10-20 Gew.-% herzhaften Geschmack verleihende Zutaten umfasst.

6. Zusammensetzung nach irgendeinem der vorhergehenden Ansprüche, wobei die Zusammensetzung 1-8 Gew.-%, vorzugsweise 2-6 Gew.-% Wasser umfasst.

7. Zusammensetzung nach irgendeinem der vorhergehenden Ansprüche, wobei das Puffmais-Endosperm eine Schüttdichte in dem Bereich von 25 bis 100 g/l, bevorzugter zwischen 35 und 80 g/l, aufweist.

8. Zusammensetzung nach irgendeinem der vorhergehenden Ansprüche, wobei beim Sieben mindestens 80 Gew.-% der Teilchen ein Sieb mit Öffnungen von 1000 $\mu$m passieren, vorzugsweise mindestens 80 Gew.-% der Teilchen ein Sieb mit Öffnungen von 800 $\mu$m passieren, bevorzugter mindestens 80 Gew.-% der Teilchen ein Sieb mit Öffnungen von 500 $\mu$m passieren und wobei vorzugsweise nicht mehr als 35 Gew.-% der Teilchen ein Sieb mit Öffnungen von 100 $\mu$m passieren und wobei vorzugsweise nicht mehr als 35 Gew.-% der Teilchen ein Sieb mit Öffnungen von 150 $\mu$m passieren.

9. Zusammensetzung nach irgendeinem der vorhergehenden Ansprüche, wobei die Zusammensetzung 5-50 Gew.-% teilchenförmiges Pflanzen- und Fleischmaterial umfasst, ausgewählt aus Fleischstücken, Fleischaroma, Kräutern, Gewürzen, Gemüse und Kombinationen davon.

10. Zusammensetzung nach irgendeinem der vorhergehenden Ansprüche, wobei mindestens 80 Gew.-% des teilchenförmigen Pflanzen- und Fleischmaterials ein Sieb mit Öffnungen von 2000 $\mu$m passieren.

11. Zusammensetzung nach irgendeinem der vorhergehenden Ansprüche, umfassend:

a) 20-70 Gew.-% essbares Salz, bezogen auf das Gewicht der Zusammensetzung, ausgewählt aus Natriumchlorid, Kaliumchlorid und Kombinationen davon;
b) 3-25 Gew.-% herzhaften Geschmack verleihende Zutaten, bezogen auf das Gewicht der Zusammensetzung, ausgewählt aus Glutamat, 5'-Ribonucleotiden, Saccharose, Glucose, Fructose, Milchsäure, Zitronensäure und Kombinationen davon;
c) 1-8 Gew.-% Wasser, bezogen auf das Gewicht der Zusammensetzung; und
d) 2-25 Gew.-% Teilchen von Puffmais-Endosperm, bezogen auf das Gewicht der Zusammensetzung, wobei beim Sieben mindestens 80 Gew.-% der Teilchen ein Sieb mit Öffnungen von 1500 $\mu$m passieren;
e) 1-5 Gew.-% Öl, bezogen auf das Gewicht der Zusammensetzung;
f) 5-20 Gew.-% teilchenförmiges Pflanzen- und Fleischmaterial, bezogen auf das Gewicht der Zusammensetzung,

wobei die Summe von a) und b) mindestens 40 Gew.-% des Gesamtgewichts der Zusammensetzung beträgt.

12. Verfahren zur Herstellung einer Zusammensetzung nach irgendeinem der Ansprüche 1 bis 11, wobei das Verfahren die Schritte umfasst:

a. Bereitstellen von Teilchen von Puffmais-Endosperm;

b. Kombinieren der Teilchen von Puffmais-Endosperm mit Öl und einem essbaren Salz, ausgewählt aus Natriumchlorid, Kaliumchlorid und Kombinationen davon, und herzhaften Geschmack verleihenden Zutaten, ausgewählt aus Glutamat, 5'-Ribonucleotiden, Saccharose, Glucose, Fructose, Milchsäure, Zitronensäure und Kombinationen davon.

13. Verfahren zur Herstellung einer Zusammensetzung nach Anspruch 12, weiter umfassend den Schritt des Kombinierens der Teilchen vom gepufferten Endosperm mit teilchenförmigem Pflanzen- oder Fleischmaterial.

14. Verfahren zur Herstellung eines Nahrungsmittelprodukts, wobei das Verfahren die Schritte umfasst:

a. Bereitstellen einer Zusammensetzung gemäß irgendeinem der Ansprüche 1 bis 11,
b. Kombinieren der Zusammensetzung vom Schritt a. mit einer Kochflüssigkeit.

15. Verwendung von Teilchen von Puffmais-Endosperm, um das visuelle Erscheinungsbild von teilchenförmigen Würzzusammensetzungen und deren Umami-Eigenschaften zu verbessern, wobei beim Sieben mindestens 80 Gew.-% der Teilchen ein Sieb mit Öffnungen von 1500 $\mu$m passieren.

**Revendications**

1. Composition d'assaisonnement particulaire, savoureuse comprenant :

a) 1-80 % en masse de la composition, d'un sel comestible choisi parmi le chlorure de sodium, chlorure de potassium et des combinaisons de ceux-ci ;
b) 1-30 % en masse de la composition, d'ingrédients fournissant un goût savoureux choisis parmi le glutamate, les 5'-ribonucléotides, le saccharose, glucose, fructose, acide lactique, acide citrique et des combinaisons de ceux-ci ;
c) jusqu'à 10 % en masse de la composition, d'eau ; et
d) 1-30 % en masse de la composition de particules d'endosperme de maïs soufflé, dans laquelle lors du tamisage au moins 80 % en masse desdites particules d'endosperme de maïs passent un tamis avec des ouvertures de 1 500 $\mu$m,
e) 1-20 % en masse de la composition, d'huile dans laquelle la somme de a) et b) est d'au moins 20 % en masse, de la masse totale de la composition.

2. Composition selon la revendication 1, dans laquelle la matière particulaire consiste en particules ayant une taille moyenne de particule d'au moins 10 $\mu$m, de préférence dans laquelle au moins 80 % en masse des particules passent un tamis avec des ouvertures de 1 500 $\mu$m.

3. Composition selon la revendication 1 ou 2, comprenant 2-15 % en masse de la composition, d'huile, de préférence 5-10 % en masse d'huile, de préférence dans laquelle l'huile est choisie dans le groupe consistant en huile de tournesol, huile de soja, huile de colza, huile de maïs, huile d'olive, huile de coton, huile de carthame, oléine de palme et des combinaisons de celles-ci.

4. Composition selon l'une quelconque des revendications précédentes, dans laquelle la composition comprend 5-75 % en masse, de préférence 10-70 % en masse, de sel.

5. Composition selon l'une quelconque des revendications précédentes, dans laquelle la composition comprend 5-25 % en masse, de préférence 10-20 % en masse d'ingrédients fournissant un goût savoureux.

6. Composition selon l'une quelconque des revendications précédentes, dans laquelle la composition comprend 1-8 % en masse, de préférence 2-6 % en masse, d'eau.

7. Composition selon l'une quelconque des revendications précédentes, dans laquelle l'endosperme de maïs soufflé présente une masse volumique apparente dans l'intervalle de 25 à 100 g/L, encore mieux de 35 à 80 g/L.

8. Composition selon l'une quelconque des revendications précédentes, dans laquelle lors du tamisage au moins 80 % en masse desdites particules passent un tamis avec des ouvertures de 1 000 $\mu$m, de préférence au moins 80 % en masse desdites particules passent un tamis avec des ouvertures de 800 $\mu$m, bien mieux encore au moins 80 % en masse desdites particules passent un tamis avec des ouvertures de 500 $\mu$m et dans laquelle de préférence au plus 35 % en masse desdites particules passent un tamis avec des ouvertures de 100 $\mu$m, et dans laquelle de préférence au plus 35 % en masse desdites particules passent un tamis avec des ouvertures de 150 $\mu$m.

9. Composition selon l'une quelconque des revendications précédentes, dans laquelle la composition comprend 5-50 % en masse de matériau de plante et viande particulaire choisi parmi des morceaux de viande, des arômes de viande, des herbes, des épices, des légumes et des combinaisons de ceux-ci.

10. Composition selon l'une quelconque des revendications précédentes, dans laquelle au moins 80 % en masse dudit matériau de plante et viande particulaire passent un tamis avec des ouvertures de 2 000 $\mu$m.

11. Composition selon l'une quelconque des revendications précédentes, comprenant :

a) 20-70 % en masse de la composition, d'un sel comestible choisi parmi le chlorure de sodium, chlorure de potassium et des combinaisons de ceux-ci ;
b) 3-25 % en masse de la composition, d'ingrédients fournissant un goût savoureux choisis parmi le glutamate, les 5'-ribonucléotides, le saccharose, glucose, fructose, acide lactique, acide citrique et des combinaisons de ceux-ci ;
c) 1-8 % en masse de la composition, d'eau ; et
d) 2-25 % en masse de la composition, de particules d'endosperme de maïs soufflé, dans laquelle lors du tamisage au moins 80 % en masse desdites particules passent un tamis avec des ouvertures de 1 500 $\mu$m ;
e) 1-5 % en masse de la composition, d'huile ;
f) 5-20 % en masse de la composition, de matériau de plante et viande particulaire,

dans laquelle la somme de a) et b) est d'au moins 40 % en masse de la masse totale de la composition.

12. Procédé pour la préparation d'une composition selon l'une quelconque des revendications 1 à 11, dans lequel le procédé comprend les étapes de :

a. fourniture de particules d'endosperme de maïs soufflé ;
b. combinaison des particules d'endosperme soufflé avec de l'huile et un sel comestible choisi parmi le chlorure de sodium, chlorure de potassium et des combinaisons de ceux-ci et des ingrédients fournissant un goût savoureux choisis parmi le glutamate, les 5'-ribonucléotides, le saccharose, glucose, fructose, acide lactique, acide citrique et des combinaisons de ceux-ci.

13. Procédé pour la préparation d'une composition selon la revendication 12, comprenant de plus l'étape de combinaison des particules d'endosperme soufflé avec un matériau de plante ou viande particulaire.

14. Procédé pour la préparation d'un produit alimentaire, dans lequel le procédé comprend les étapes de :

a. fourniture d'une composition selon l'une quelconque des revendications 1 à 11,
b. combinaison de la composition de l'étape a. avec un liquide de cuisson.

15. Utilisation de particules d'endosperme de maïs soufflé pour améliorer l'apparence visuelle de compositions d'assaisonnement, particulaires et les caractéristiques d'umami de celles-ci, dans laquelle lors du tamisage au moins 80 % en masse desdites particules passent un tamis avec des ouvertures de 1 500 $\mu$m.

**EP 3 897 202 B1**

**Patent documents cited in the description**

- WO 03000076 A
- WO 2007085609 A
- WO 2017171553 A